# EUROPEAN PATENT APPLICATION

(11) **EP 4 026 721 A1**
(43) Date of publication of application: **13.07.2022**
(21) Application number: 20859663.5
(22) Date of filing: 07.07.2020
(51) Int. Cl.: B60L 15/42, H04L 12/28

(54) **VEHICLE INFORMATION CONTROL SYSTEM**

(30) Priority: 06.09.2019 JP 2019163167
(71) Applicant: Hitachi, Ltd., Tokyo 100-8280 (JP)
(72) Inventor: IKEUCHI, Yuta, Tokyo 100-8280 (JP); YAMAMOTO, Naoaki, Tokyo 100-8280 (JP); SUZUKI, Takayuki, Tokyo 100-8280 (JP); KUBO, Ichiro, Tokyo 100-8280 (JP)
(74) Representative: MERH-IP Matias Erny Reichl Hoffmann Patentanwälte PartG mbB
(86) International application number: PCT/JP2020/026547
(87) International publication number: WO 2021/044725

(57) **Abstract**

To avoid, in a state where car formations including trunk transmission paths in a redundant duplex system are linked, that, due to a fault in a transmission path on one side in the system, a formation configuration cannot be determined and that, as a result, car operation is hampered, a car information control system includes: transmission paths installed, in a redundant multiplex system, across plural cars configuring a formation; and integrated train control units and transmission terminals mounted on the cars and connected to the respective transmission paths in the redundant multiplex system. The integrated train control units: recognize formation configurations information on which is obtained from the respective transmission paths; adopt, when the formation configurations recognized in a state with plural formations linked are identical between the respective transmission paths, the formation configurations, or, when the formation configurations are not identical between the respective transmission paths, detect that the transmission paths in the redundant multiplex system have a fault and adopt a formation configuration including a largest number of cars; and distribute information on the adopted formation configuration to the transmission terminals. The transmission terminals are connected with on-car devices mounted on the cars and allocate IP addresses to the on-car devices based on the information on the formation configuration received from the integrated train control units.

## Description

### TECHNICAL FIELD

The present invention relates to a car information control system capable of meeting a situation where trains are linked or divided, too.

### BACKGROUND ART

A car information control system controls/monitors devices mounted on cars.

In patent literature 1, a technology is disclosed in which: between plural linked railway cars, plural transmission terminals respectively connected to a first and a second transmission path configuring a redundant system respectively monitor information transfers through the first and the second transmission path; normally, one of the transmission paths is used as valid with the other transmission path left unused as invalid; and, when a fault occurrence is detected in the one of the transmission paths, information transfers through the transmission path are treated as invalid, whereas the other transmission path is selected to enable valid information transfers.

In patent literature 2, a technology is disclosed according to which, in a state where formations including train information management devices compatible with transmission protocols for cars based on different specifications (Ethernet (registered trade mark) protocol and ARCNET protocol) are mixed, when the formations are linked together, information complying with whichever protocol can be read in whichever formation.

### CITATION LIST

### Patent Literature

Patent literature 1: Japanese Unexamined Patent Application Publication No. 2013-126164
Patent literature 2: International Publication No. 2014/188487

### SUMMARY OF INVENTION

### Technical Problem

In trunk transmission paths of a redundant duplex system, when, at a time of linking formations (at a time of changing a formation configuration), a fault (e.g., a disconnection) occurs in either system, the formation configurations recognized in a transmission path-1 system and in a transmission path-2 system become different. A problem is that, when this occurs, the formation configuration cannot be determined, so that car information control over the whole linked formations (controlling and monitoring of devices) is not possible and so that car operations are hampered.

The present invention has been made in view of the above problem, and an object of the invention is to make it possible for a car information control system to recognize, even in a state where, with linked formations including cars having trunk transmission paths in a redundant duplex system, a fault exists in the trunk transmission path on one side in the system, a formation configuration including linked formations and perform car information control.

### Solution to Problems

To solve the above problem, the car information control system according to the present invention includes: transmission paths installed, in a redundant multiplex system, across plural cars configuring a formation; and integrated train control units and transmission terminals mounted on the cars and connected to the respective transmission paths in the redundant multiplex system. The integrated train control units execute processing: to recognize formation configurations information on which is obtained from the respective transmission paths; to adopt, when the formation configurations recognized in a state with the plural formations linked are identical between the respective transmission paths, the formation configurations, or, when the formation configurations are not identical between the respective transmission paths, to detect that the transmission paths in the redundant multiplex system have a fault and adopt a formation configuration including a largest number of cars; and to distribute information on the adopted formation configuration to the transmission terminals. The transmission terminals are connected with on-car devices mounted on the cars and allocate IP addresses to the on-car devices based on the information on the formation configuration received from the integrated train control units.

### Advantageous Effects of Invention

According to the present invention, even in cases where, in a state with formations linked, information on formation linkage is transmitted only through a transmission path on one side in a redundant duplex system including trunk transmission paths, for example, due to a fault in an electric coupler of a car, it is possible to recognize the formation configuration including the trunk transmission paths linked in the redundant duplex system and perform car information control over the whole formation while retaining the transmission path redundancy.

### BRIEF DESCRIPTION OF DRAWINGS

[FIG. 1] Fig. 1 is a diagram showing a configuration example in a state with, in a linked formation including two formations, a trunk transmission path on one side in a redundant duplex system disconnected.
[FIG. 2] FIG. 2 is a diagram showing a configuration example of a leading car.
[FIG. 3] FIG. 3 is a diagram showing a configuration example of an intermediate car.
[FIG. 4] FIG 4 is a diagram showing a flowchart of processing leading from determination of a formation configuration when linking trains to system activation.

### DESCRIPTION OF EMBODIMENT

In the following, as a form of implementing the present invention, an embodiment example will be described with reference to drawings. Though the present invention concerns, as trunk transmission paths, not only those in a redundant duplex system but also those in a redundant multiplex system, the following embodiment will be described as an example based on a redundant duplex system.

### [Embodiment]

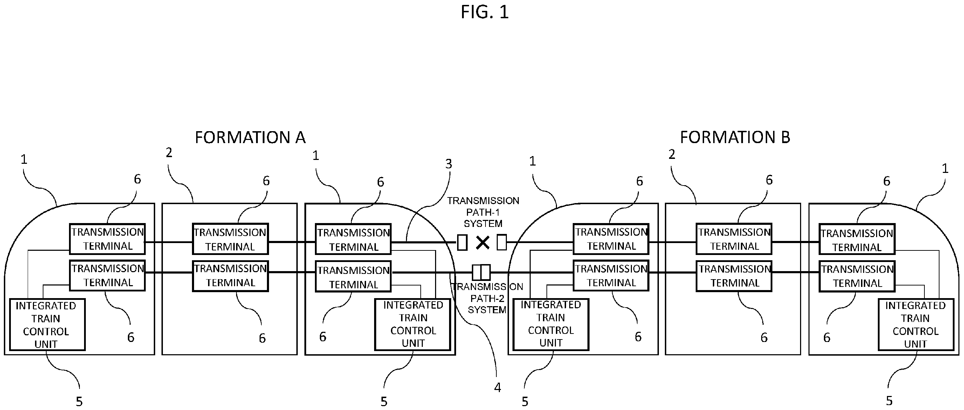

Fig. 1 is a diagram showing a configuration example in a state with, in a linked formation including a formation A and a formation B, a transmission path system 1 on one side in a redundant duplex system is disconnected.

The formation A and the formation B respectively include plural cars, for example, three cars as shown in FIG. 1.

One each of the integrated train control units 5 configuring a car information control system is installed in a leading car 1 of each formation. In the case of the formations A and B shown in FIG. 1, an integrated train control unit 1 is provided in each of the cars 1 that can be leading the train depending on traveling direction.

Transmission terminals 6 included in the car information control system are installed to be in each car of each formation and in each trunk transmission path in the redundant duplex system. In the example shown in FIG. 1, each of the leading cars 1 and intermediate cars 2 is provided with transmission terminals 6 to be in a transmission path-1 system 3 and a transmission path-2 system 4.

This configuration is maintained even when the number of cars included in each of the formation A and the formation B is increased or decreased.

The integrated train control unit 5 provided in each leading car 1 and the transmission terminals 6 provided in each of the cars (1 and 2) are connected by trunk transmission paths (3 and 4) in a redundant duplex system, thereby enabling data transmission.

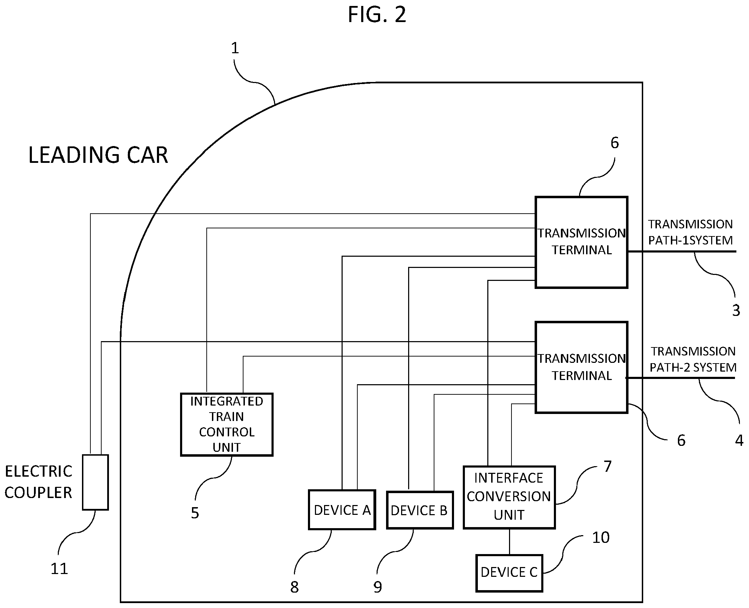

FIG. 2 is a diagram showing a configuration example of a leading car 1. The transmission terminals 6 respectively connected to the transmission path-1 system 3 and the transmission path-2 system 4 are each connected with an integrated train control unit 5 besides being connected with devices A and B and also with, via an interface conversion unit 7, device C, and, furthermore, with an electric coupler provided at a car head.

When formations are linked, out of the integrated train control units 5 provided in the cars configuring the linked formation, one to be a master integrated train control unit 5 is determined. For example, the integrated train control unit 5 provided in the leading car 1 in the traveling direction of the linked formation is made a master.

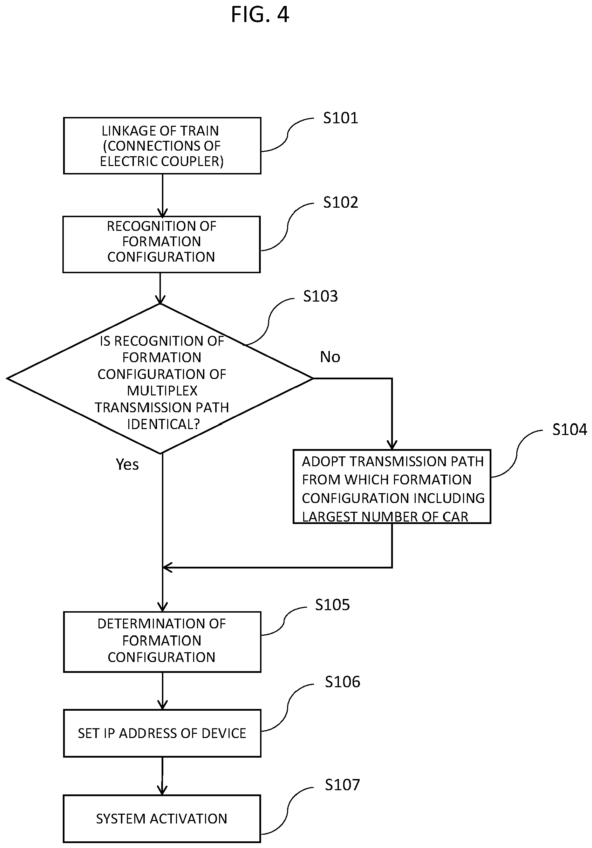

The integrated train control unit 5 made the master executes processing based on the flowchart shown in FIG. 4 being described later. The integrated train control units 5 other than the master can be made to operate to subsequently repeat distribution to each transmission terminal 6 of information on the formation configuration distributed from the master integrated train control unit 5 to each transmission terminal 6.

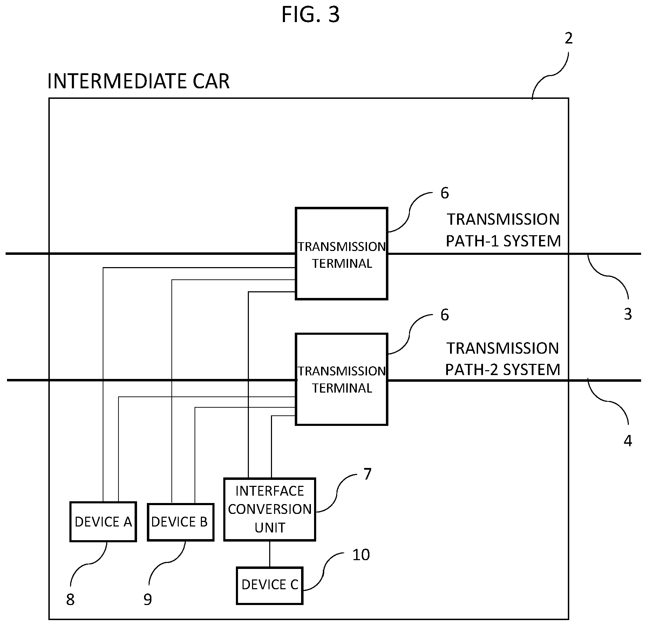

FIG. 3 is a diagram showing a configuration example of an intermediate car 2. The transmission terminals 6 respectively connected to the transmission path-1 system 3 and the transmission path-2 system 4 are each connected with devices A and B and also with, via an interface conversion unit 7, a device C.

As described above, the transmission terminals 6 provided in each of the cars (1 and 2) are connected, either directly or via an interface conversion unit 7, with devices A to C mounted on the cars and control/monitor car information. The devices A to C mounted on each of the cars (1 and 2) include, for example, a trunk controller, a security system, a drive system, a door control system, an in-car guidance system, and an automatic announcement system. Whether the connections of devices A to C to the transmission terminals 6 are direct or via an interface conversion unit 7 is determined appropriately depending on the condition of interface matching between the devices and the transmission terminals 6.

FIG 4 is a diagram showing a flowchart of processing leading from determination of a formation configuration when linking trains to system activation. Redundant trunk transmission paths are provided as a multiplex system which may be the above duplex system.

In step 101, the integrated train control unit 5 serving as the master detects (acquires), from each of the respective trunk transmission paths in the multiplex system, the state of train formation linkage based on the states of connections of the electric couplers 11.

In step 102, the integrated train control unit 5 serving as the master recognizes the formation configuration based on the state of train formation linkage detected (acquired) from each of the respective trunk transmission paths in the multiplex system.

In step 103, the integrated train control unit 5 serving as the master determines whether or not the formation configurations recognized based on the respective trunk transmission paths in the multiplex system are identical.

When determined not identical (No), the integrated train control unit 5 serving as the master detects, in step 104, that the linkage parts of the trunk transmission paths have a fault and adopts the transmission path from which a formation configuration including a largest number of cars has been detected (that is, a transmission path regarded normal).

In step 105, the integrated train control unit 5 serving as the master determines, in cases where the determination result in step 103 has been YES, as final the recognized formation configuration as it is, or otherwise, determines as final the formation configuration including a largest number of cars as adopted in step 104, then distributes information on the determined formation configuration along with information on the traveling direction to each transmission terminal 6.

In step 106, each transmission terminal 6 having received the information on the determined formation configuration updates the information on the formation configuration managed and stored in the transmission terminal 6 itself, and sets IP addresses of the devices A to C connected to itself in the car where the transmission terminal 6 itself is mounted.

When the IP addresses of all devices A to C included in the formation have been set, the system configured by the train formation is activated in step S107.

Processing may be arranged such that, after system activation, the integrated train control unit 5 serving as the master informs that, as detected in the above step 104, the linkage parts of the trunk transmission paths have a fault to, for example, the driver by outputting a display to a monitor screen on the driver's platform.

The transmission terminals 6 are each provided with a topology counter (not shown) and, when the information on the formation configuration is updated, the counter value before updating is retained. When the counter values before and after updating of the information on the formation configuration differ, the transmission terminals 6 keep blocking at formation boundaries (communication blocking between adjacent formations).

The information on a state with a fault as described above (information on the formation configuration and topology counter values before and after information updating) is entirely cleared when the power supply is turned off and when formation disconnection or linkage is carried out.

As described above, according to the present embodiment, even in cases where, with formations linked, information on the linkage is transmitted only through a transmission path on one side in a redundant multiplex system including trunk transmission paths, it is possible to determine the formation configuration linked via the trunk transmission paths in the redundant multiplex system, set the IP addresses of all devices mounted on the cars included in the formation configuration and perform train information control for the whole formation.

### LIST OF REFERENCE SIGNS

1 ··· Leading car, 2 ··· Intermediate car, 3 ··· Transmission path-1 system, 4 ··· Transmission path-2 system, 5 ··· Integrated train control unit, 6 ··· Transmission terminal, 7 ··· Interface conversion unit, 8 ··· Device A, 9 ··· Device B, 10 ··· Device C, 11 ··· Electric coupler

## Claims

1. A car information control system comprising:
transmission paths installed, in a redundant multiplex system, across a plurality of cars configuring a formation, and
integrated train control units and transmission terminals mounted on the cars and connected to the respective transmission paths in the redundant multiplex system,
wherein the integrated train control units execute processing:
to recognize formation configurations information on which is obtained from the respective transmission paths;
to adopt, when the formation configurations recognized in a state with a plurality of the formations linked are identical between the respective transmission paths, the formation configurations, or, when the formation configurations are not identical between the respective transmission paths, to detect that the transmission paths in the redundant multiplex system have a fault and adopt a formation configuration including a largest number of cars; and
to distribute information on the adopted formation configuration to the transmission terminals,
wherein the transmission terminals are connected with on-car devices mounted on the cars and allocate IP addresses to the on-car devices based on the information on the formation configuration received from the integrated train control units.

2. The car information control system according to claim 1,
wherein the integrated train control units execute processing to distribute information including information on a travel direction to the transmission terminals.

3. The car information control system according to one of claims 1 and 2,
wherein the integrated train control units execute processing to notify of the fault detected in the transmission paths in the redundant multiplex system.

4. The car information control system according to one of claims 1 to 3,
wherein the processing for execution by the integrated train control units is executed by an integrated train control unit determined, when a plurality of the formations are linked, as a master.
